# EUROPÄISCHE PATENTSCHRIFT

(11) **EP 1 374 966 B1**
(45) Veröffentlichungstag und Bekanntmachung des Hinweises auf die Patenterteilung: **25.07.2007**
(21) Anmeldenummer: 03011795.6
(22) Anmeldetag: 24.05.2003
(51) Int. Cl.: B01D 33/21, B01D 63/16, B01D 29/41

(54) **Filter oder Sortierer**
Filter or separator
Filtre ou séparateur

(30) Priorität: 19.06.2002 AT 9192002
(43) Veröffentlichungstag der Anmeldung: 02.01.2004
(73) Patentinhaber: Andritz AG, 8045 Graz (AT)
(72) Erfinder: Gabl, Helmuth, Dipl.-Ing. Dr., 8046 Graz (AT); Buedenbender, Christian, Ing., 8045 Graz (AT); Sket, Peter, 8101 Gratkorn (AT)
(74) Vertreter: Schweinzer, Friedrich

(56) Entgegenhaltungen:
- EP-A- 0 126 213
- DE-A- 2 249 468
- DE-C- 594 953
- DE-U- 29 518 534

## Beschreibung

Die Erfindung betrifft ein Filter oder Sortierer, beispielsweise Membranfilter, mit auf einer Hohlwelle angeordneten Filter- oder Sortierscheiben, wobei die Hohlwelle aus mehreren Wellenelementen zusammengesetzt ist.

Es sind verschiedenste Arten von Filtern mit auf einer Hohlwelle angeordneten Filterscheiben bekannt. Insbesondere gibt es Membranfilter, die für die Querstromfiltration eingesetzt werden, z.B. gemäß der WO 00/47312, bei der mehrere Scheiben auf einer Welle und mehrere derartige Wellen derart angeordnet sind, dass die Scheiben überlappen. Bei diesen Filtern wurden die einzelnen Scheiben auf die Hohlwelle aufgeschoben. Besonders bei sehr schwierig zu montierenden Mehrwellensystemen ergaben sich immer wieder Brüche von Scheiben. Zudem war es notwendig, das gesamte Modul (Welle mit einer Vielzahl von Scheiben) zu zerlegen, damit die zu reparierenden Scheiben ausgetauscht werden konnten. Bei der hohen Zahl von Scheibenelementen bedurfte dies eines sehr hohen Zeitaufwandes und dadurch bedingte hohe Maschinenausfallzeiten. Die DE -C-594.953 beschreibt ein Scheibenfilter, bei dem die Wellenteile mittels Flanschverbindungen zusammengeschraubt werden. Weiters sind am Wellenteil mehrere Filtersegmente befestigt, die zusammen eine Filterscheibe ergeben. Hier ist pro Flansch eine Vielzahl von Schrauben erforderlich, wodurch bei einem Ersatz eines Wellenelementes zuerst die Filtersegmente demontiert, dann die Schrauben zwischen den benachbarten Wellenelementen gelöst und schließlich nach Ersatz des Wellenelementes in umgekehrter Reihenfolge wieder eine Montage erfolgt. Dies erfordert einen hohen Zeitaufwand bei Ersatz eines Wellenelementes. Aber auch die EP 126213 erfordert ein Zerlegen des Filterpaketes bis zu einem allfälligen schadhaften Filterelement, um letzteres ersetzen zu können. In der DE 2249468 ist es erforderlich zum Austausch eines Filterelements den gesamten Block zu zerlegen.

Ziel der Erfindung ist es daher, ein System zu schaffen, bei dem eine einfache Montage und auch eine einfache Reparatur möglich sind.

Dies erfolgt erfindungsgemäß dadurch, dass die einzelnen Wellenelemente zusammensteckbar ausgeführt sind und die Verbindung der Wellenelemente mittels eines Bajonettverschlusses erfolgt. Damit kann eine Welle mit selbsttragender Funktion erzeugt werden, die einfach montierbar und gegebenenfalls auch reparierbar ist. Weiters können die Scheiben bereits auf der Welle vormontiert sein, so dass immer eine exakte Verbindung der Scheibenhohlräume mit den Abflussöffnungen und dem Hohlraum der Welle zur Permeatabfuhr gewährleistet ist und es lässt sich die Verbindung ohne übermäßigen Kraftaufwand herstellen und auch wieder lösen.

Eine günstige Weiterbildung der Erfindung ist dadurch gekennzeichnet, dass ein Wellenelement ein bis mehrere - vornehmlich zwei bis vier Scheiben aufweist. Diese Ausführung ermöglicht eine einfache und schnelle Montage einer gesamten Hohlwelle und auch eine Demontage für eine schnelle Reparatur. Weiters wird die Welle dadurch stabiler.

Die Wellenelemente können aus unterschiedlichen Materialen hergestellt werden. Ebenso können Mischbauweisen - z.B. Klemmteil aus rostfreiem Stahl, Scheibenaufnahmeteil aus Kunststoff - Verwendung finden.

Um eine sichere Trennung der Flüssigkeitsströme zu gewährleisten ist erfindungsgemäß vorgesehen dass zwischen den einzelnenWellenelementen Dichtringe angeordnet sind.

Wenn zwischen den mit Filter- oder Sortierscheiben versehenen Wellenelementen zusätzlich Wellenelemente ohne Filterscheiben (Blindsegmente) vorgesehen sind, kann die Leistung des Filters gut an die Bedürfnisse angepasst werden, d.h. soll ein Filter später erweitert werden, werden bei der Auslieferung Blindelemente vorgesehen, die nachher durch effektive Elemente mit Filter- oder Sortierscheiben ersetzt. Im anderen Fall kann bei einer Verringerung der Filtrationsleistung z.B. bei einer anderen Zusammensetzung des Mediums in einfacher Weise ein Element mit Filter- oder Sortierscheiben durch ein Blindelement ersetzt werden. Dadurch bleiben die Strömungsgeschwindigkeiten in und an den Filter- oder Sortierscheiben gleich und können immer optimal eingestellt werden.

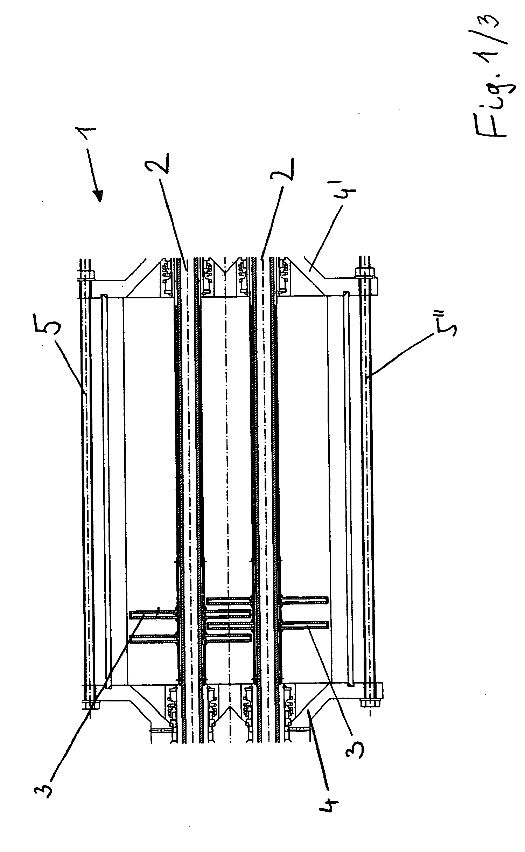

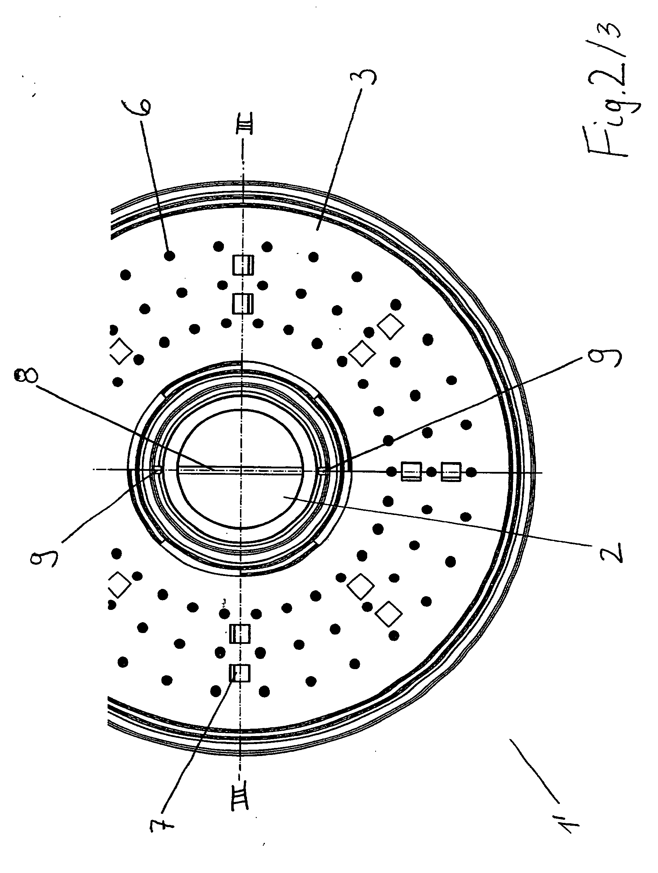

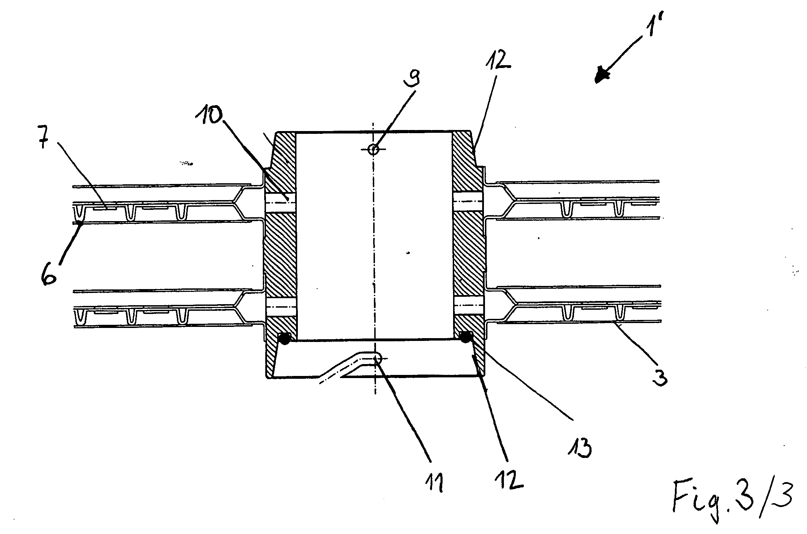

Die Erfindung wird nun anhand der Zeichnungen beispielhaft beschrieben, wobei Fig. 1 einen Schnitt durch ein Filter nach dem Stand der Technik, Fig. 2 eine Draufsicht auf ein erfindungsgemäßes Wellenelement und Fig. 3 einen Schnitt durch Fig. 2 gemäß Linie III-III darstellt.

In Fig.1 ist ein Schnitt durch ein herkömmliches Filter 1 dargestellt, bei dem zwei Hohlwellen 2 erkennbar sind. Pro Hohlwelle sind hier zur deutlicheren Darstellung jeweils zwei Filterscheiben 3 dargestellt, wobei jedoch das gesamte Filter mit derartigen Scheiben 3 bestückt ist. Besonders gut sieht man hier, dass die beiden Endteile 4, 4' mit mehreren Zugstangen 5, 5' zusammengehalten werden müssen. Wird nun eine beschädigte Filterscheibe ausgetauscht, so müssen alle Zugstangen 5, 5' gelöst und die Hohlwellen 2 vollständig ausgebaut werden. Anschließend werden dann die noch intakten Filterscheiben 3 von einem Ende entfernt, bis die beschädigte Filterscheibe erreicht ist, die dann ausgetauscht werden kann. Dann ist das Filter wieder entsprechend zusammenzubauen, was einen großen Zeitaufwand bedeutet.

Fig. 2 zeigt eine Draufsicht auf ein erfindungsgemäßes Wellenelement 1' mit einer Hohlwelle 2 und Filter- oder Sortierscheiben 3. Die Filter- oder Sortierscheiben 3 können Filter- oder Sortierflächen aus Keramik, Metall oder aus anderen Materialien, z.B. Kunststoff, aufweisen. Je nach Anwendungsfall können dabei Loch-, Poren- bzw. Schlitzbreiten von < 50 µm über mehrerer 100 µm bis zu ca. 2-5 mm Verwendung finden. Der Durchmesser der Hohlwelle 2 wird entsprechend dem Permeatmengenfluss gewählt, wodurch sich deutliche Durchmesserunterschiede bei Verwendung als Filtrations- oder Sortiermaschine ergeben. In der Draufsicht sind die Befestigungspunkte 6 (beispielsweise Schweißpunkte) von der Filter- oder Sortierfläche zum Grundkörper der Filter- oder Sortierscheibe 3 erkennbar. Auch ist der Verschließmechanismus 7 für eine zweiteilige Ausführung der Filter- oder Sortierscheibe 3 dargestellt. Weiters ist der Bolzen 8 mit seinen über den Hohlwellenkörper herausragenden Stücken 9 erkennbar, durch die der Formschluss zwischen den einzelnen Wellenelementen 1' als Bajonettverschluss ausgeführt ist.

In Fig. 3 ist der Schnitt durch das Wellenelement 1' gemäß Linie III-III in Fig. 2 dargestellt. Das dargestellte Wellenelement 1' weist zwei Filterscheiben 3 auf, wobei aber je nach Bedarf auch eine oder mehrere Scheiben vorgesehen sein können. Die bei Verwendung von Filter- oder Sortierscheiben 3 vorgesehenen Abflussöffnungen 10 in den Hohlraum der Hohlwelle 2 können aber bei Blindelementen unterbleiben. Hier ist sehr gut das Bolzenende 9 am oberen Ende erkennbar. Am unteren Ende befindet sich ein entsprechend ausgestalteter Schlitz 11, in dem das Bolzenende 9 bei Montage einrastet. Ebenfalls dargestellt ist hier die Reibfläche 12 sowohl am oberen, als auch am unteren Ende des Wellenelementes 1'. Zur Abdichtung des Flüssigkeitsflusses zwischen den Wellenelementen 1' sind Dichtringe 13 vorgesehen. Je nach Einsatzfall bzw. auch der Länge der sich ergebenden Filterwelle kann es ausreichend sein nur einen Formschluss mittels Bolzen 8, 9 und Schlitz 11 oder nur einen Reibschluss mit den Flächen 12 vorzusehen.

## Patentansprüche

1. Filter oder Sortierer, beispielsweise Membranfilter, mit auf einer Hohlwelle angeordneten Filter- oder Sortierscheiben, wobei die Hohlwelle (2) aus mehreren Wellenelementen (1') zusammengesetzt ist **dadurch gekennzeichnet, dass** die einzelnen Wellenelemente (1') zusammensteckbar ausgeführt sind und die Verbindung der Wellenelemente (1') mittels eines Bajonettverschlusses (8, 10) erfolgt.

2. Filter oder Sortierer, nach Anspruch 1, **dadurch gekennzeichnet, dass** ein Wellenelement (1') ein bis mehrere, vornehmlich zwei bis vier Filter- oder Sortierscheiben (3) aufweist.

3. Filter oder Sortierer nach einem der Ansprüche 1 oder 2, **dadurch gekennzeichnet, dass** zwischen den einzelnen Wellenelementen (1') Dichtringe (12) vorgesehen sind.

4. Filter oder Sortierer nach einem der Ansprüche 1 bis 3, **dadurch gekennzeichnet, dass** zwischen den mit Filterscheiben (3) versehenen Wellenelementen (1') zusätzlich Wellenelemente ohne Filterscheiben (Blindsegmente) vorgesehen sind.

## Claims

1. Filter or screen, for example a membrane filter, with filter or screening discs mounted on a hollow shaft, where the hollow shaft (2) is made up of several shaft elements (1'), **characterised by** the individual shaft elements (1') having a design that can be pieced together and the shaft elements (1') being connected by a bayonet catch (8, 10).

2. Filter or screen according to Claim 1, **characterised by** one shaft element (1') comprising one or several - preferably two to four - filter or screening discs (3).

3. Filter or screen according to one of Claims 1 or 2, **characterised by** sealing rings (12) being provided between the individual shaft elements (1').

4. Filter or screen according to one of Claims 1 to 3, **characterised by** additional shaft elements without filter discs (dummy segments) being provided between the shaft elements (1') equipped with filter discs (3).

## Revendications

1. Filtre ou classeur, par exemple, filtre à membrane, avec des disques à filtre ou disques classeurs montés sur un arbre creux, l'arbre creux (2) consistant en plusieurs éléments d'arbre (1'), **caractérisé en ce que** les éléments d'arbre (1') individuels sont étudiés de façon embrochable et que la connexion entre les éléments d'arbre (1') s'assure moyennant un joint à baïonnette (8, 10).

2. Filtre ou classeur selon la revendication 1, **caractérisé en ce qu'**un des éléments d'arbre (1') comprends un ou plusieurs - de préférence deux à quatre - disques à filtre ou disques classeurs (3).

3. Filtre ou classeur selon l'une des revendications 1 ou 2, **caractérisé en ce que** des bagues d'étanchéité (12) sont prévues entre les éléments d'arbre (1') individuels.

4. Filtre ou classeur selon l'une des revendications 1 à 3, **caractérisé en ce que** des éléments d'arbre supplémentaires sans disques à filtre (segments bornes) sont, en outre, prévus entre les éléments d'arbre (1') comportant des disques à filtre (3).
